# FASCICULE DE BREVET EUROPEEN

(11) **EP 3 761 785 B1**
(45) Date de publication et mention de la délivrance du brevet: **04.05.2022**
(21) Numéro de dépôt: 19717525.0
(22) Date de dépôt: 05.03.2019
(51) Int. Cl.: A01M 1/02, A01M 1/06, A01M 1/10

(54) **APPAREIL POUR PRENDRE AU PIÈGE DES INSECTES VOLANTS NUISIBLES ET PROCÉDÉ DE COMPTAGE DES INSECTES PIÉGÉS**
FALLE FÜR FLIEGENDEN INSEKTEN UND VERFAHREN ZUM ZÄHLEN DER GEFANGENEN INSEKTEN
TRAP FOR FLYING INSECTS AND PROCESS FOR COUNTING TRAPPED INSECTS

(30) Priorité: 06.03.2018 FR 1851929
(43) Date de publication de la demande: 13.01.2021
(73) Titulaire: Techno Bam, 13560 Sénas (FR)
(72) Inventeur: BELLAGAMBI, Pierre, 13910 MAILLANE (FR); LILLAMAND, Simon, 13910 MAILLANE (FR)
(74) Mandataire: Roman, Alexis
(86) Numéro de dépôt international: PCT/FR2019/050485
(87) Numéro de publication internationale: WO 2019/170996

(56) Documents cités:
- WO-A1-2011/123004
- WO-A1-2016/020627
- WO-A1-2016/168347
- KR-A- 20150 041 247
- US-A- 5 813 166

## Description

### Domaine technique de l'invention.

L'invention a pour objet un appareil pour prendre au piège des insectes volants nuisibles ainsi qu'un procédé de comptage des insectes piégés.

Elle concerne le domaine technique des systèmes permettant d'attirer et de capturer des insectes volants nuisibles, en particulier les insectes diptères nématocères (suceurs de sang) et les diptères hématophages (mordeurs).

### État de la technique,

Dans les zones particulièrement exposées à la présence des moustiques, les collectivités, les offices de tourisme et les particuliers dépensent des sommes considérables pour effectuer des traitements préventifs de destruction des larves de moustiques.

Diverses techniques de lutte contre les moustiques existent actuellement :
- la technique larvicide : elle implique l'utilisation de produits chimiques ou biologiques qui agissent sur les moustiques au stade immature pour freiner leur développement. Cette technique est efficace pour freiner le développement des moustiques, car leurs larves occupent en général un espace géographique minimum et facilement localisable. Toutefois, elle est très coûteuse. De plus, l'utilisation fréquente de larvicides peut entrainer un phénomène d'habituation et de résistance au produit utilisé.
- la technique des insecticides : elle vise à éliminer les moustiques adultes avec des substances chimiques synthétiques ou naturelles (par ex. les pyrétroïdes). Toutefois, cette technique engendre des coûts considérables et implique une logistique lourde (pulvérisation aérienne ou terrestre). De plus, les substances insecticides peuvent aussi avoir des effets nocifs sur la santé des humains et des animaux. Par ailleurs, leur utilisation répétée présente un risque de résistance.
- la technique des répulsifs : elle vise à détourner les moustiques de leur cible potentielle, en perturbant leurs facultés de repérage avec des substances chimiques synthétiques ou naturelles (par exemple le DEET (N,N-diéthyl-3-méthylbenzamide). Cependant, cette technique ne tue généralement pas les moustiques, mais les repousse de leur proie. De plus, peu d'études de toxicité à long terme ont été réalisées sur les répulsifs disponibles actuellement sur le marché.

Les études environnementales démontrent que tous produits chimiques se dégradent mal et ont tendance à se diffuser dans l'écosystème. En plus d'être nocive pour la faune des zones traitées en impactant la base de la chaîne alimentaire, la démoustication traite uniquement les zones sauvages sans traiter les zones urbanisées où les nuisances sont essentielles et où les risques de prolifération d'infection virale liée aux moustiques sont les plus grands. Les produits chimiques utilisés atteignent et détruisent les prédateurs naturels des moustiques, ce qui a pour effet de réduire sensiblement l'efficacité globale des campagnes de démoustication.

La protection des zones d'habitation situées dans les régions infectées par les moustiques passe donc par la recherche de moyens écologiquement moins agressifs.

On connait par les documents brevets WO2016/020627 (TECHNO BAM), US 2009/0162253 (PORCHIA), US 2007/0006520 (DURAND), US 2004/0154213 (MOSHER) ou US 5813166 (WIGTON), des appareils susceptibles de fournir une réponse alternative adaptée, et correspondants à un besoin réel. Ces appareils comprennent généralement : - un dispositif de diffusion, dans l'air ambiant environnant, d'un cocktail attractif gazeux dont la composition est adaptée pour attirer les insectes ; - un dispositif d'aspiration présentant un orifice d'aspiration d'un flux d'air ambiant environnant contenant les insectes attirés par le cocktail attractif gazeux diffusé ; - un piège à insectes agencé avec le dispositif d'aspiration de sorte que les insectes aspirés par ledit dispositif soient retenus dans ledit piège ; - un châssis renfermant une source de gaz reliée au dispositif de diffusion, lequel gaz est un constituant du cocktail attractif gazeux. Ce type d'appareil est une alternative à la démoustication par larvicide.

Ces appareils de l'art antérieur ne peuvent généralement piéger qu'un nombre restreint d'espèces d'insectes volants nuisibles. En effet, les différentes espèces d'insectes volants nuisibles ne volent pas toutes à la même hauteur. Certains volent très près du sol tels que les moustiques tropicaux Aedes Alobopictus, Aegypti ou Anophèles, et d'autres à distance du sol tels que les moustiques ornithophiles. Dans les appareils précités, le dispositif d'aspiration est généralement solidarisé au châssis contenant la source de gaz, de sorte que l'orifice d'aspiration est situé à une distance fixe du sol. Ces appareils ont donc une efficacité limitée lorsqu'ils sont installés dans des zones où les insectes volent près du sol.

Le document brevet EP 1.049.373 (AMERICAN BIOPHYSICS CORP) suggère de positionner l'orifice d'aspiration à une distance du sol comprise entre 1 pied et 3 pieds pour capturer des espèces volant près du sol. Un crochet permet de suspendre l'appareil en hauteur, pour capturer d'autres espèces, par exemple certaines espèces tropicales qui volent dans la canopée. Le réglage de la hauteur de l'orifice d'aspiration de cet appareil est relativement rudimentaire, peu précis et peu commode pour l'utilisateur.

Le document brevet WO2016/168347 (UNIVERSITY OF FLORIDA RESEARCH FOUNDATION) divulgue un dispositif de piégeage d'insectes, permettant de détecter, compter, piéger et rejeter une population d'insectes. Le dispositif comprend un boîtier produisant une force directionnelle au travers d'un passage étroit pour déplacer un insecte dans une direction prédéterminée. Le dispositif comprend un ou plusieurs détecteurs pour détecter la présence d'un insecte le long du passage étroit. Un processeur suit un comptage d'une population dans le panier sur la base de la détection de la présence de l'insecte ou moustique. Le comptage est réalisé au moyen d'un capteur optique combiné à un capteur audio et à un capteur vidéo. Trois types de capteurs distincts sont donc nécessaire au comptage, ce qui complexifie la conception et augmente considérablement les coûts. En outre, pour assurer un comptage précis, il est nécessaire de faire circuler les insectes au travers d'un passage étroit. Le nombre d'insectes capturés doit donc être limité si l'on veut un comptage optimal. Aussi, la précision du comptage se fait au détriment de la capacité de piégeage des insectes.

L'invention vise à remédier aux inconvénients précités de l'art antérieur. Un autre objectif de l'invention est de proposer un appareil permettant de compter précisément les insectes piégés tout en assurant une capacité de piégeage optimale.

Un autre objectif de l'invention est de proposer un appareil dont l'efficacité est optimale quelle que soit la zone où il est installé.

Un autre objectif de l'invention de proposer un appareil qui soit commode pour l'utilisateur, de conception simple, peu onéreuse, facile à utiliser, et facilement manipulable.

### Divulgation de l'invention.

La solution proposée par l'invention est un appareil pour prendre au piège des insectes volants nuisibles comprenant :
- un dispositif de diffusion, dans l'air ambiant environnant, d'un cocktail attractif gazeux dont la composition est adaptée pour attirer les insectes,
- un dispositif d'aspiration présentant un orifice d'aspiration d'un flux d'air ambiant environnant contenant les insectes attirés par le cocktail attractif gazeux diffusé,
- un piège à insectes agencé avec le dispositif d'aspiration sorte que les insectes aspirés par ledit dispositif soient retenus dans ledit piège,

Cet appareil est remarquable en ce que le compteur optique d'insectes comprend une série de déflecteurs parallèles installés en travers de l'orifice d'aspiration, une barrière lumineuse composée d'un émetteur de lumière et d'un récepteur de lumière étant installé dans chaque intervalle entre lesdits déflecteurs.

Chaque paire d'émetteur -récepteur forme un capteur de détection, de sorte que l'orifice d'aspiration est associé à une pluralité de capteurs de détection Quelle que soit la taille ou le diamètre de l'orifice d'aspiration, on est donc certain que chaque insecte sera canalisé vers un capteur de détection et sera compté. On peut donc utiliser un orifice d'aspiration 220 de taille ou de diamètre relativement large permettant de capturer un maximum d'insectes, tout en ayant un comptage très précis.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Avantageusement, les déflecteurs sont espacés les uns des autres d'une distance comprise entre 4 mm et 9 mm.
- Avantageusement, l'émetteur est une LED infrarouge et le récepteur est une photodiode.
- Avantageusement, le compteur optique d'insectes est situé au début de la zone d'aspiration de l'orifice d'aspiration.
- Selon une caractéristique avantageuse de l'invention, un châssis renferme une source de gaz reliée au dispositif de diffusion, lequel gaz est un constituant du cocktail attractif gazeux ; le dispositif de diffusion, le dispositif d'aspiration et le piège à insectes forment une structure reliée au châssis par l'intermédiaire d'au moins un moyen de réglage en hauteur de ladite structure, dans le sens d'un écartement ou d'un rapprochement du niveau du sol de l'orifice d'aspiration.
- Avantageusement, le moyen de réglage en hauteur se présente sous la forme d'au moins une traverse fixée à la structure, laquelle traverse se solidarise au châssis selon une pluralité de positions verticales permettant de régler l'écartement ou le rapprochement du niveau du sol de l'orifice d'aspiration.
- Selon une variante de réalisation, le moyen de réglage en hauteur se présente sous la forme d'au moins une traverse fixée au châssis, laquelle traverse se solidarise à la structure selon une pluralité de positions verticales permettant de régler l'écartement ou le rapprochement du niveau du sol de l'orifice d'aspiration.
- Avantageusement, une connexion fluidique est réalisée entre la source de gaz installée dans le châssis et le dispositif de diffusion, laquelle connexion fluidique passe au travers de la au moins une traverse.
- Une source d'alimentation électrique peut être installée dans le châssis, une connexion électrique étant réalisée entre ladite source et la structure, laquelle connexion électrique passe au travers de la au moins une traverse.
- Le châssis peut se présenter sous la forme d'un lampadaire urbain.
- Avantageusement, le dispositif d'aspiration comprend un élément chauffant (240) disposé au niveau de l'orifice d'aspiration, en amont dudit orifice.
- Cet élément chauffant est préférentiellement chauffé à une température comprise entre 35°C et 45°C.
- Avantageusement, le dispositif de diffusion est piloté par une unité de commande adaptée pour que le cocktail attractif gazeux soit diffusé dans l'air ambiant environnant selon un rythme sinusoïdal simulant un rythme de respiration d'un être humain.
- Cette unité de commande est préférentiellement adaptée pour faire varier la fréquence du rythme sinusoïdal de diffusion du cocktail attractif gazeux.

Un autre aspect de l'invention concerne un procédé pour compter des insectes volants nuisibles, ledit procédé consistant à :
- diffuser, dans l'air ambiant environnant, un cocktail attractif gazeux dont la composition est adaptée pour attirer les insectes,
- aspirer, au travers d'un orifice d'aspiration, un flux d'air ambiant environnant contenant les insectes attirés par le cocktail attractif gazeux diffusé,
- retenir dans un piège les insectes aspirés,
- compter de manière optique les insectes aspirés au travers de l'orifice d'aspiration.
Le procédé comprenant en outre les étapes consistant à :
- installer une série de déflecteurs parallèles en travers de l'orifice d'aspiration,
- installer, dans chaque intervalle entre les déflecteurs, une barrière lumineuse composée d'un émetteur de lumière et d'un récepteur de lumière.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue en perspective d'un appareil conforme à l'invention,
- la figure 2 montre l'appareil de la figure 1 avec le dispositif de diffusion partiellement désassemblé,
- la figure 3a est une vue en perspective d'une plaque pliable constitutive du dispositif de diffusion,
- la figure 3b est une vue en perspective du dispositif de diffusion obtenu par le pliage de la plaque de la figure 3a,
- la figure 4a est une vue en perspective d'une plaque pliable constitutive du dispositif d'aspiration,
- la figure 4b est une vue en perspective du dispositif d'aspiration obtenu par le pliage de la plaque de la figure 4b,
- la figure 5a est une vue en perspective d'une plaque pliable constitutive du châssis renfermant la source de gaz,
- la figure 5b est une vue en perspective du châssis obtenu par le pliage de la plaque de la figure 5b,
- la figure 6a est une vue agrandie de l'orifice d'aspiration associé à un compteur optique d'insectes,
- la figure 6b illustre schématiquement, vue de haut, l'agencement d'un compteur optique d'insectes au niveau de l'orifice d'aspiration,
- la figure 7 est une vue schématique en coupe d'un appareil conforme à l'invention ;
- la figure 8 montre un appareil conforme à l'invention selon une variante de réalisation,
- la figure 9 est un diagramme illustrant différents rythmes sinusoïdaux de diffusion du cocktail attractif gazeux dans l'air ambiant environnant,
- la figure 10 schématise une configuration de la connexion fluidique et de la connexion électrique au niveau d'une traverse,
- la figure 11 illustre une installation comportant plusieurs appareils conformes à l'invention mis en réseau.

### Modes préférés de réalisation de l'invention.

L'appareil objet de l'invention est destiné à piéger les insectes diptères nématocères (suceurs de sang) tels que les moustiques et les insectes diptères hématophages (mordeurs de leur proie) tels que les Simulies. Le principe consiste à simuler la présence et la respiration d'un mammifère en son endroit. De manière plus générale l'invention vise à prendre au piège des insectes volants nuisibles. Attirés par un cocktail attractif, les insectes ciblés sont ensuite aspirés et capturés. Ainsi emprisonnés, les insectes peuvent être soient tués, soient récupérés vivants, par exemple pour une étude scientifique ultérieure.

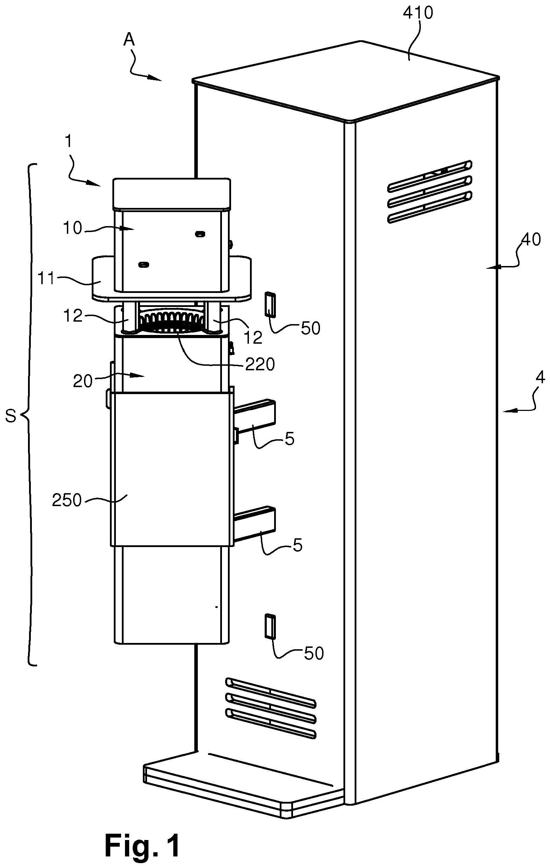

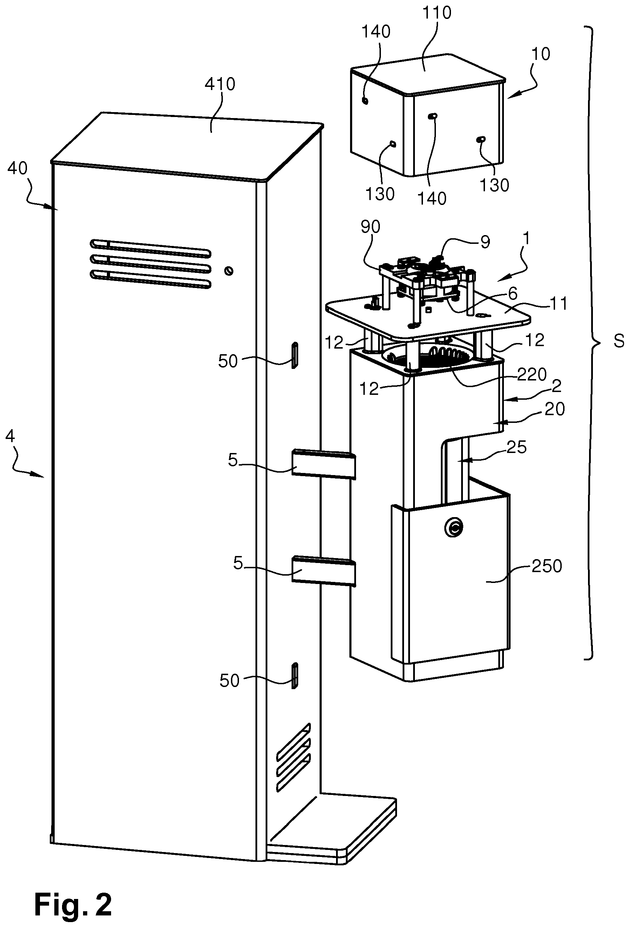

Sur les figures 1 et 2, l'appareil A comprend :
- un dispositif de diffusion 1, permettant de diffuser dans l'air ambiant environnant, un cocktail attractif gazeux dont la composition est adaptée pour attirer les insectes,
- un dispositif d'aspiration 2 présentant un orifice d'aspiration 20 d'un flux d'air ambiant environnant contenant les insectes attirés par le cocktail attractif gazeux diffusé par le dispositif de diffusion 1,
- un piège 3 à insectes agencé avec le dispositif d'aspiration 2 de sorte que les insectes aspirés par ledit dispositif soient retenus dans ledit piège,
- un châssis 4 renfermant une source de gaz reliée au dispositif de diffusion 1, lequel gaz est un constituant du cocktail attractif gazeux. Le châssis 4 est directement posé au sol et peut être pourvu de roues de manière à le rendre mobile et/ou déplaçable.

Sur la figure 2, le dispositif de diffusion 1 comprend une boîte 10 parallélépipédique creuse fixée sur un plateau 11 formant chapeau. A titre d'exemple, la boîte 10 a une hauteur comprise entre 10 cm et 20 cm et des côtés dont la longueur est comprise entre 10 cm et 20 cm. La fixation de la boîte 10 sur le plateau 11 est préférentiellement réalisée par aimantation de manière à ce qu'un utilisateur puisse facilement séparer ces deux éléments. Une fixation par vissage ou encliquetage est également possible. Le plateau 11 se présente sous la forme d'une plaque plane horizontale de forme carrée, réalisée en acier ou en plastique, et notamment un matériau plastique du type polypropylène expansé, préférentiellement commercialisé sous la marque FOAMLITE^{®}. Les côtés du plateau 11 ont des dimensions supérieures aux côtés de la boîte 10. Par exemple, les côtés du plateau 11 sont deux fois plus longs que ceux de la boîte 10.

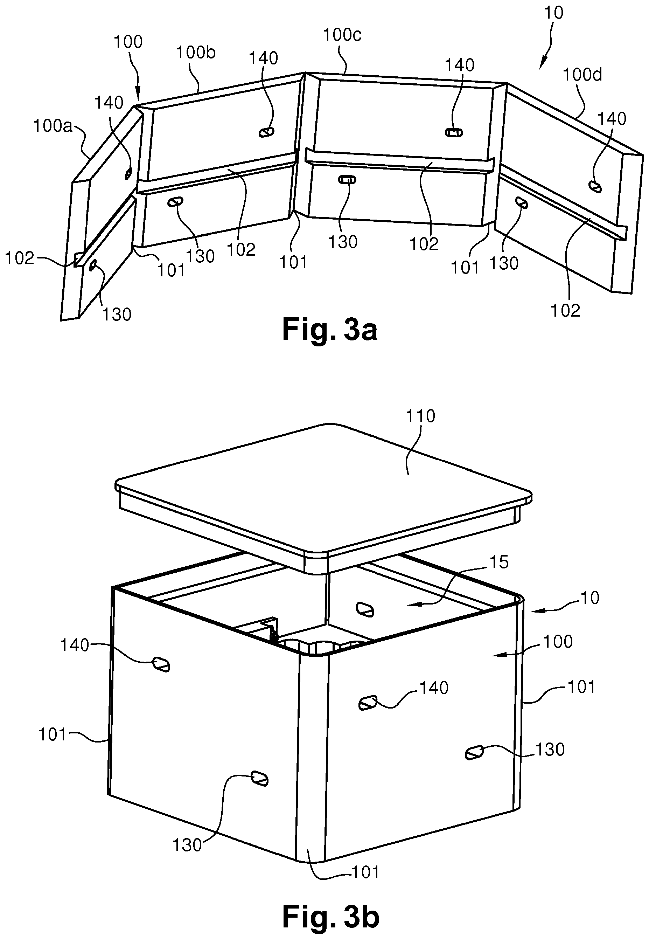

Sur les figures 3a et 3b, la boîte 10 est conformée à partir d'une plaque 100 comprenant des panneaux latéraux 100a, 100b, 100c, 100d reliés entre eux par des pliures 101 autorisant sa mise en volume. Le maintien en forme de la boîte 10 est assuré par une fixation par collage, soudage ou par emboîtement des bordures latérales des panneaux d'extrémités 100a et 100d. Un couvercle 110 vient fermer la partie supérieure de la boîte 10 après mise en volume de celle-ci. Le couvercle 110 est avantageusement amovible de manière à autoriser un accès facile à l'intérieur de la boîte 10.

L'utilisation d'une telle plaque 100 présente plusieurs avantages et notamment : une mise en volume simple et ne nécessitant pas d'outillage spécifique ; un encombrement réduit particulièrement appréciable lors des phases de transport et/ou de stockage avant mise en volume.

La plaque 100 et le couvercle 110 sont préférentiellement réalisés en matériau plastique du type polypropylène expansé, préférentiellement commercialisé sous la marque FOAMLITE^{®}. Ce matériau présente en effet, outre son faible poids, une bonne résistance mécanique et une bonne résistance aux agressions chimiques.

Chaque panneau 100a-100d de la plaque 100 présente, sur sa face interne (i.e. la face située à l'intérieur de la boîte 10 après mise en volume de cette dernière), une rainure longitudinale 102 dans laquelle vient se loger, sans autre type de moyen de fixation, les bordures d'un plateau support comme expliqué plus avant dans la description.

Une fois mise en volume et obturée par le couvercle 110, la boîte 10 définit une chambre creuse 15 à l'intérieur de laquelle sont installés les éléments permettant de dispenser le cocktail attractif gazeux. Ce dernier est préférentiellement un mélange de CO₂ et de leurres olfactifs volatiles. Le CO₂ induit sur les insectes une stimulation nerveuse similaire à celle produite par la respiration d'un mammifère à sang chaud. Les leurres olfactifs utilisés reproduisent avantageusement l'odeur de la peau humaine. On utilise par exemple de l'octénol (C₈H₁₆O), en particulier le 1-octén-3-ol (CAS # 3391-86-4), et/ou de l'acide lactique, ces composés donnant de bons résultats. Ces composés évitent également d'attirer des insectes volants non nuisibles tels que les abeilles.

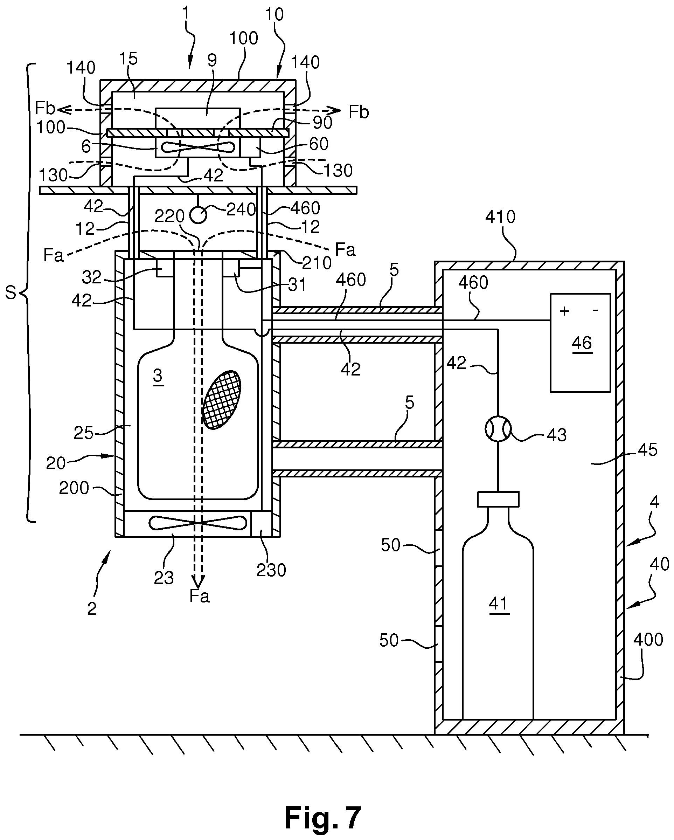

En se rapportant plus particulièrement à la figure 7, les leurres olfactifs sont disposés dans une cartouche amovible 9, laquelle cartouche est placée dans la chambre creuse 15, au-dessus d'un ventilateur 6. La cartouche 9 est installée sur la face supérieure du plateau support 90 qui s'emboîte dans les rainures longitudinales 102 mentionnées précédemment. Le ventilateur 6 est installé sur la face inférieure de ce plateau support 90. Ce dernier divise ainsi la chambre creuse 15 en deux zones : une zone supérieure dans laquelle est installée la cartouche 9 et une zone inférieure dans laquelle est installé le ventilateur 6. Le plateau 90 présente des orifices ou aménagements permettant une circulation d'air de la zone inférieure vers la zone supérieure de la chambre creuse 15.

Les leurres olfactifs sont avantageusement contenus ou imprégnés dans un support de leurres qui est placé dans le flux d'air Fb généré dans la chambre creuse 15, par le ventilateur 6. Ce support de leurres est de préférence choisi parmi (i) une bougie ; (ii) un support poreux tel que des billes en bois, exploitant l'effet de capillarité; (iii) un support sous forme de gel ; et (iv) une plaquette en matière absorbante plus ou moins spongieuse. De bons résultats sont obtenus, lorsque le support de leurres est poreux et lorsque les leurres olfactifs sont utilisés à l'état liquide.

Sur la figure 7, le châssis 4 renferme une source 41 de CO₂. Cette dernière se présente par exemple sous la forme d'une bonbonne rechargeable sous pression, dont la contenance est par exemple comprise entre 0,5 Kg et 50 Kg. Un tuyau souple 42 met en communication fluidique la bonbonne 41 et la chambre creuse 15, et plus particulièrement la zone inférieure de ladite chambre où est contenu le ventilateur 6. Le CO₂ se mélange de fait au flux d'air aspiré par le ventilateur 6 et aux leurres olfactifs volatiles disposés dans la cartouche 9. Un débitmètre 43 permet de régler le débit de CO₂ injecté dans la chambre 15. De très bons résultats sont obtenus lorsque ce débit est compris entre 0,15 L/min et 0,5 L/min. Selon une caractéristique avantageuse de l'invention, le CO₂ est diffusé de manière continue dans la chambre creuse 15. Même lorsque le ventilateur 6 est inactif, le CO₂ se diffuse dans la cuve 51 en passant au travers des pales dudit ventilateur. La bonbonne 41 peut être associée à un capteur permettant d'avertir un opérateur lorsque ladite bombonne est vide.

Les insectes sont d'autant plus attirés par le CO₂ que la température de ce dernier est supérieure à la température de l'air ambiant environnant. Il peut donc être avantageux de chauffer préalablement le CO₂ avant sa diffusion. Ce chauffage peut être induit naturellement par les rayons incidents du soleil qui chauffent la chambre creuse 15. Pour amplifier ce phénomène naturel, la chambre creuse 15 peut être formée par, ou contenir, un matériau réfractaire (plaques d'acier, pierre de lave,...) adapté pour emmagasiner la chaleur et la restituer au flux Fb, et donc au CO₂.

Au passage du flux d'air Fb généré par le ventilateur 6 et chargé en CO₂, les leurres olfactifs contenus dans la cartouche 9 s'évaporent. Ils se diffusent toutefois de manière continue dans la chambre creuse 15, même en l'absence du flux d'air généré par le ventilateur 6. Cela est essentiellement dû au fait que la chambre creuse 15 est chauffée par les rayons incidents du soleil, la température régnant à l'intérieur de la boîte 10 provoquant une évaporation continue des leurres olfactifs à l'intérieur de ladite chambre. Lorsque la cartouche 9 est vide, il suffit d'ôter le couvercle 110 pour l'enlever et la remplacer par une autre. La cartouche 9 peut être associée à un capteur permettant d'avertir un opérateur lorsqu'elle est vide.

Le ventilateur 6 est avantageusement adapté pour expirer le flux Fb selon un débit compris entre 10 m³/H et 300 m³/H, préférentiellement environ 150 m³/H. Il aspire l'air ambiant depuis des orifices 130 réalisés sur les panneaux 100a-100d de la plaque 100 (figures 3a, 3b et 7), sous le plateau 90, dans la zone inférieure de la chambre creuse 15. Le flux d'air aspiré par le ventilateur 6 est rejeté dans la zone supérieure de la chambre creuse 15, de laquelle il ressort par des orifices 140 réalisés sur les panneaux 100a-100d de la plaque 100 (figures 3a, 3b et 7), au dessus du plateau 90. Les orifices 130 et 140 sont débouchants à l'air ambiant environnant et sont disposés de manière homogène ou pas sur le pourtour de la boîte 10. Le cocktail attractif gazeux peut ainsi se répandre sur une large zone, notamment sur un rayon d'action d'environ 50 m à 60 m, correspondant à une surface d'environ 10000 m².

En pratique, le ventilateur 6 comprend un moteur qui tire un signe de puissance électrique d'une batterie pour faire tourner ses pales générant ainsi le flux Fb. Le ventilateur 6 est piloté par une unité de commande 60 (figure 7) se présentant par exemple sous la forme d'une carte électronique intégrant un processeur et/ou une temporisation.

Les inventeurs ont constaté que le nombre d'insectes piégés augmente lorsque le cocktail attractif gazeux est diffusé dans l'air ambiant environnant selon un rythme sinusoïdal simulant un rythme de respiration d'un être humain. Aussi, l'unité de commande 60 est configurée pour piloter le ventilateur 6 de sorte que le flux Fb qu'il génère le soit selon ce rythme sinusoïdal. La fréquence (nombre de cycles ou périodes par unité de temps) du rythme sinusoïdal de diffusion du cocktail attractif gazeux peut varier au cours d'une journée afin de simuler une augmentation du rythme de respiration liée à une activité sportive, ou une diminution pour simuler une période de repos. Cette fréquence est préférentiellement comprise entre 10 cycles par minute et 70 cycles par minute.

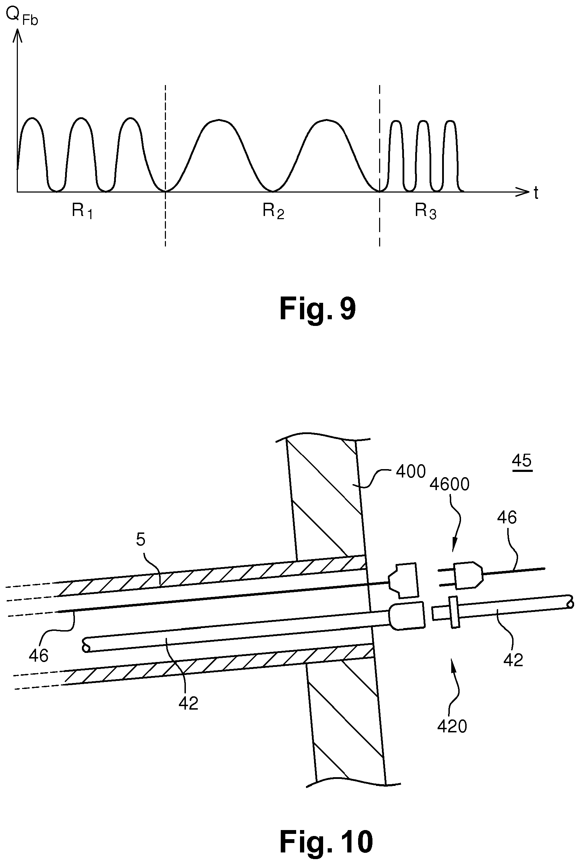

La figure 9 est un diagramme illustrant différents rythmes sinusoïdaux de diffusion du cocktail attractif gazeux dans l'air ambiant environnant. Les abscisses correspondent au temps (t) et les ordonnées correspondent au débit du flux Fb (Q_{Fb}) expiré hors de la boîte 10. Trois séquences R1, R2 et R3 sont représentées. La séquence R1 simule un rythme respiratoire d'un être humain adulte, par exemple compris entre 20 à 40 cycles par minute. La séquence R2 simule un rythme respiratoire d'un être humain adulte au repos, par exemple compris entre 10 à 20 cycles par minute. La séquence R3 simule un rythme respiratoire d'un être humain adulte en période d'activité sportive, par exemple compris entre 40 à 60 cycles par minute. Sur cette figure 9, l'amplitude est la même pour chaque séquence. Elle peut toutefois varier d'une séquence à l'autre, voire pendant une même séquence.

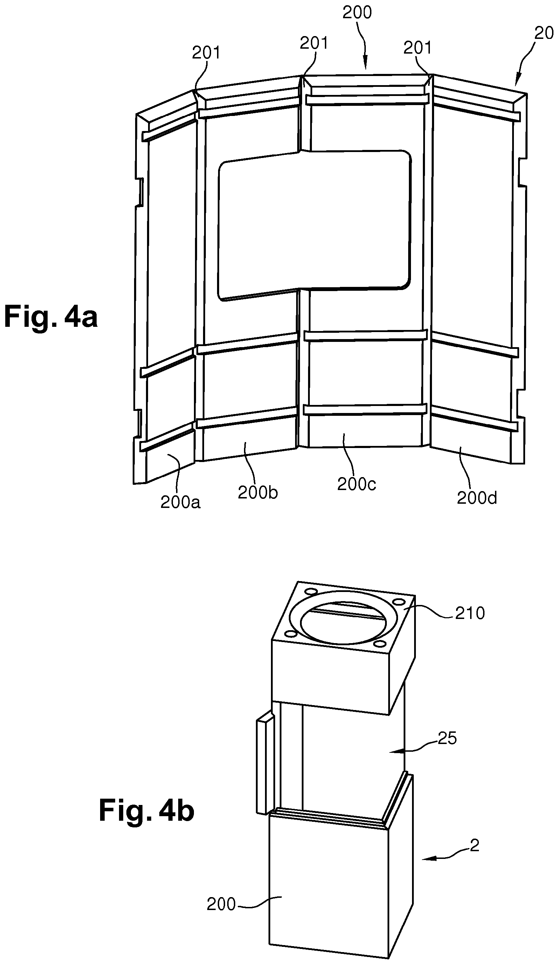

Le dispositif d'aspiration 2 et le piège 3 à insectes vont maintenant être décrits plus en détail. Sur les figures 1 et 2, le dispositif d'aspiration 2 est situé en dessous du dispositif de diffusion 1. En se rapportant aux figures 4a et 4b, le dispositif d'aspiration 2 comprend une boîte 20 parallélépipédique creuse ayant, à titre d'exemple, une hauteur comprise entre 30 cm et 60 cm et des côtés dont la longueur est comprise entre 10 cm et 20 cm. Sur les figures 4a et 4b, la boîte 20 est conformée à partir d'une plaque 200 comprenant des panneaux latéraux 200a, 200b, 200c, 200d reliés entre eux par des pliures 201 autorisant sa mise en volume. Le maintien en forme de la boîte 20 est assuré par une fixation par collage, soudage ou par emboîtement des bordures latérales des panneaux d'extrémités 200a et 200d. La plaque 200 est également associée à un couvercle 210 venant fermer la partie supérieure de la boîte 20 après mise en volume de celle-ci. Ce couvercle 210 présente une ouverture circulaire 220 formant orifice d'aspiration et dont le diamètre est par exemple compris entre 8 cm et 18 cm, cette plage de diamètres permettant de capturer un grand nombre d'insectes à la fois.

La plaque 200 est préférentiellement réalisée en matériau plastique du type polypropylène expansé, préférentiellement commercialisé sous la marque FOAMLlTE^{®}. L'utilisation d'une telle plaque 200 présente les mêmes avantages en termes de poids, simplicité de montage et encombrement réduit que ceux mentionnés précédemment en référence à la plaque 100.

Une fois mise en volume, la boîte 20 définit une chambre creuse 25 à l'intérieur de laquelle est installé le piège à insectes 3. Sur les figures 1 et 2, une trappe et/ou une porte 250 montée mobile entre une position fermée (figure 1) et une position ouverte (figure 2), est avantageusement prévue pour autoriser un accès à l'intérieur de la chambre creuse 25. Sur les figures annexées, cette porte 250 est montée mobile en translation verticale. Elle pourrait toutefois avoir un mouvement de rotation autour d'une charnière.

En se rapportant à la figure 7, l'orifice d'aspiration 220 débouche dans ce piège à insectes 3, lequel piège se présente sous la forme d'un sac souple en maille, ou filet. Il est attaché, par exemple au moyen d'un cordon ou collier de serrage au niveau de l'orifice d'aspiration 220. Ce filet 3 est avantageusement réutilisable, et peut-être récupéré et changé depuis la porte 250. Le filet 3 peut être associé à un capteur permettant d'indiquer son remplissage.

Sur la figure 7, le dispositif d'aspiration 2 comprend un moyen d'aspiration 23, se présentant préférentiellement sous la forme d'un ventilateur. Ce moyen d'aspiration 23 est adapté pour aspirer l'air ambiant selon un débit compris entre 15 m³/H et 500 m³/H, préférentiellement environ 350 m³/H. Les débits des flux Fa et Fb sont avantageusement différents. En effet, les inventeurs ont constaté qu'on capturait davantage d'insectes lorsque le flux Fa aspiré était supérieur au flux Fb expiré.

Le ventilateur 23 crée une dépression dans la boîte 20 et aspire l'air ambiant environnant par l'orifice d'aspiration 220, à travers le filet 3. Le flux d'air ambiant aspiré est schématisé par la flèche référencée Fa sur la figure 7. En pratique, le ventilateur 23 comprend un moteur qui tire un signal de puissance électrique d'une batterie pour faire tourner ses pales, générant ainsi le flux Fa. Le ventilateur 23 est couplé à un organe de commande 230 permettant de contrôler son fonctionnement.

Sur les figures 1, 2 et 7, le dispositif de diffusion 1 est situé au dessus du dispositif d'aspiration 2 et du piège 3. Le plateau 11 a plusieurs fonctions : il protège l'orifice d'aspiration 220 des intempéries, empêchant notamment l'eau de pluie de pénétrer à l'intérieur de la boîte 20 et du piège 3 ; il forme également une barrière physique qui empêche le flux Fb expiré chargé en cocktail attractif gazeux d'être repris par le flux d'air aspiré Fa.

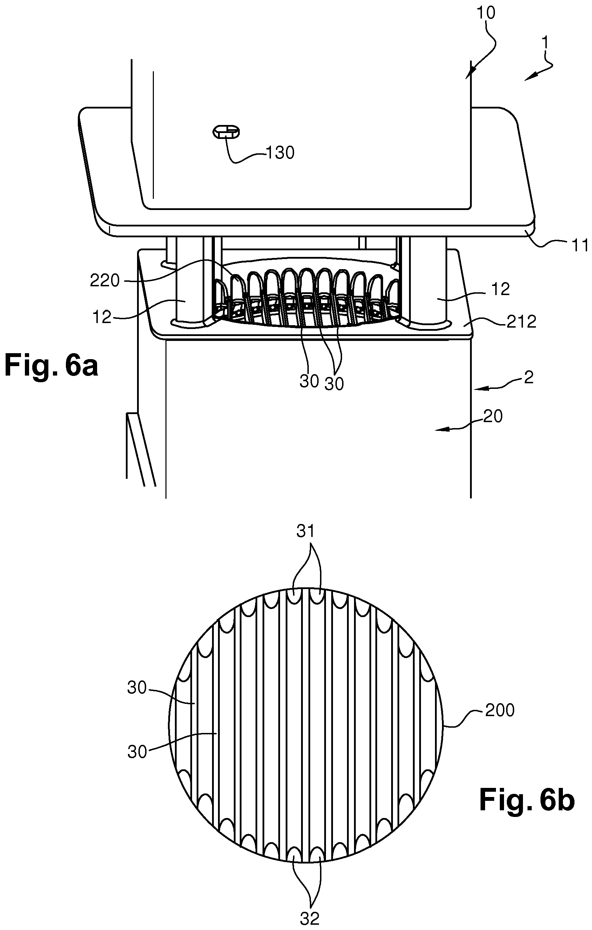

Selon une caractéristique avantageuse de l'invention illustrée sur les figures 6a et 6b, le dispositif d'aspiration 2 est pourvu d'un compteur optique d'insectes disposé au niveau de l'orifice d'aspiration 220. Ce compteur comprend une série de déflecteurs 30 parallèles installés en travers de l'orifice d'aspiration 220. Ces déflecteurs 30 sont par exemple réalisés en acier ou en plastique.

Dans chaque intervalle entre les déflecteurs 30 (ou espace séparant deux déflecteurs successifs ou espaces disposés de part et d'autre d'un déflecteur), est installée une barrière lumineuse composée d'un émetteur de lumière 31 et d'un récepteur de lumière 32. L'émetteur 31 est disposé à une extrémité de l'intervalle et le récepteur 32, à l'opposé, c'est-à-dire à l'autre extrémité dudit intervalle. On peut également prévoir d'installer l'émetteur 31 et le récepteur 32 au niveau de la même extrémité, un réflecteur (par exemple un miroir) étant disposé sur l'autre extrémité pour réfléchir la lumière émise par ledit émetteur vers ledit récepteur. Chaque paire d'émetteur 31-récepteur 32 forme un capteur de détection, de sorte que l'orifice d'aspiration 220 est associé à une pluralité de capteurs de détection.

Pour simplifier la conception et limiter la consommation énergétique du compteur, l'émetteur 31 est préférentiellement une LED infrarouge. Et le récepteur 32 est préférentiellement une photodiode. L'orifice d'aspiration 220 est ainsi « barré » » par une série de barrières lumineuses. Les déflecteurs 30 ont pour fonction de répartir et canaliser les insectes vers ces barrières lumineuses. Quelle que soit la taille ou le diamètre de l'orifice d'aspiration 220, on est donc certain que chaque insecte sera canalisé vers un capteur de détection et sera compté. On peut donc utiliser un orifice d'aspiration 220 de taille ou de diamètre relativement large permettant de capturer un maximum d'insectes, tout en ayant un comptage très précis.

Lorsqu'un insecte passe entre l'émetteur 31 et le récepteur 32, ce dernier n'est pas éclairé. Il est dans un état non-conducteur. Lorsque qu'il n'y a pas d'insecte qui coupe la barrière lumineuse, le récepteur 32 est directement éclairé par l'émetteur 31 et se trouve dans un état conducteur. Ces deux états sont interprétés par un microcontrôleur par deux états binaires 0 ou 1 ce qui permet de comptabiliser le nombre d'insectes.

Préférentiellement, les déflecteurs 30 sont espacés les uns des autres d'une distance comprise entre 4 mm et 9 mm. Cet espacement permet de s'assurer que chaque intervalle entre les déflecteurs 30 est parfaitement balayé par une barrière lumineuse, de sorte que chaque insecte passant entre lesdits déflecteurs est détecté.

Le compteur est avantageusement situé au plus près de l'orifice d'aspiration 220, au début de la zone d'aspiration. En effet, à cet endroit l'insecte a une distance de chute et d'aspiration minimale, réduisant la vitesse de passage devant les barrières lumineuses, rendant de fait le comptage plus précis. Cette performance permet en outre de ne pas augmenter outre mesure la sensibilité du récepteur 32, ce qui évite de comptabiliser d'autres particules (par exemple des poussières) susceptibles d'être aspirées par le dispositif d'aspiration 2.

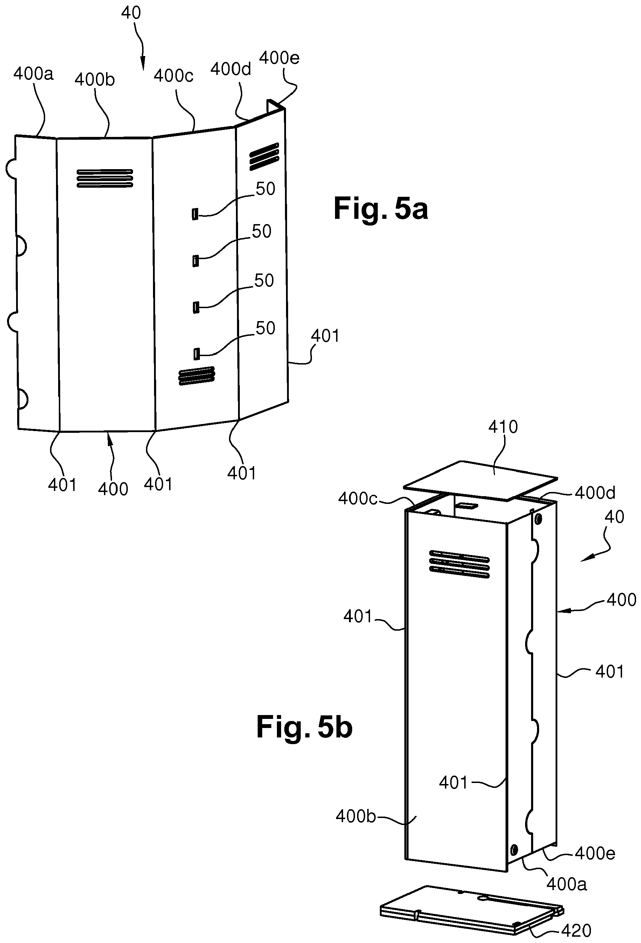

En se rapportant aux figures 5a et 5b, le châssis 4 comprend une boîte 40 parallélépipédique creuse ayant, à titre d'exemple, une hauteur comprise entre 60 cm et 150 cm et des côtés dont la longueur est comprise entre 20 cm et 40 cm. La boîte 40 est conformée à partir d'une plaque 400 comprenant des panneaux latéraux 400a, 400b, 400c, 400d reliés entre eux par des pliures 401 autorisant sa mise en volume. Le maintien en forme de la boîte 40 est assuré par une fixation par collage, soudage ou par emboîtement des bordures latérales des panneaux d'extrémités 400a et 400d. La boîte 40 est fermée au niveau de sa partie supérieure par un couvercle 410 et au niveau de sa partie inférieure par une plaque de fond 411. Le couvercle 410 est avantageusement amovible de façon à autoriser un accès aisé à l'intérieur de la boîte 40.

Une fois mise en volume, la boîte 40 définit une chambre creuse 45 à l'intérieur de laquelle est installée la source de gaz 41 et une source d'alimentation électrique 46, par exemple du type batterie, adaptée pour alimenter en électricité les différents composants de l'appareil A et notamment les différents composants électroniques 60, 230, 30 et les actionneurs 6, 23. La batterie 46 peut être couplée à un ou plusieurs panneaux solaires et/ou éoliennes de façon à rendre l'appareil A autonome. La batterie 46 peut également être rechargée simplement en la connectant à une alimentation électrique du type secteur. De manière générale, la source d'alimentation électrique 46 peut être couplée à une temporisation réglée de manière à désactiver l'appareil A durant des périodes où les insectes sont peu actifs, par exemple de minuit à 4 heures du matin.

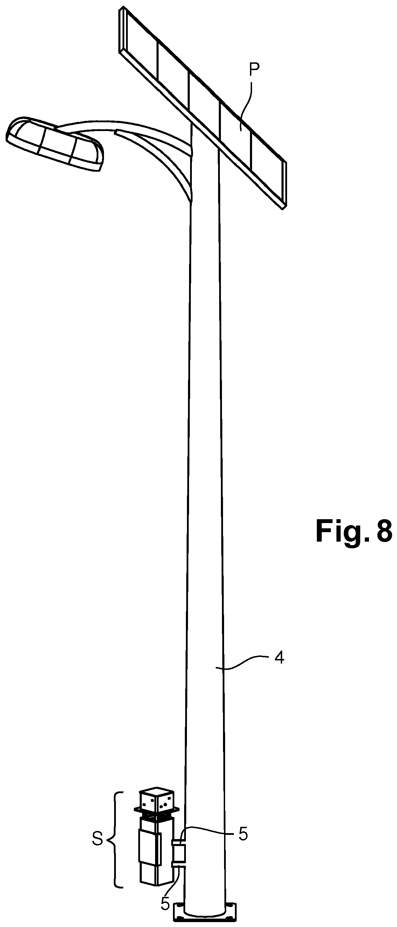

Dans la variante de réalisation illustrée sur la figure 8, le châssis 4 se présente sous la forme d'un lampadaire urbain. Dans ce cas, la source de gaz 41 est directement intégrée à l'intérieur de la structure du lampadaire. La source d'alimentation électrique peut consister en une batterie intégrée dans la structure du lampadaire et/ou au réseau de distribution d'électricité et/ou un panneau photovoltaïque P et/ou une éolienne installé sur la structure dudit lampadaire. L'appareil A peut par exemple fonctionner, pendant les périodes d'éclairage, grâce au réseau de distribution d'électricité, et en dehors de ces périodes, grâce à la batterie, celle-ci étant adaptée pour se recharger pendant les périodes d'éclairage.

Le fonctionnement de l'appareil A ainsi que la technique de capture vont maintenant être décrits plus en détail. Tout ou partie du cocktail attractif gazeux est dispensé à l'intérieur de la chambre creuse 15. Ce cocktail attractif gazeux est ensuite expulsé selon un rythme sinusoïdal dans l'air ambiant environnant comme expliqué précédemment en référence à la figure 9. Au moins les leurres olfactifs contenus dans la cartouche 9, et préférentiellement le CO₂, sont dispensés en continu à l'intérieur de la chambre creuse 15. Cette dernière se charge donc en cocktail attractif gazeux. Les inventeurs ont pu démontrer qu'un débit d'expulsion de leurres olfactifs compris entre 0,03 ml/jour et 0,3 ml/jour contribue à améliorer les propriétés attractives du cocktail attractif. Lorsque le ventilateur 6 est actionné, le flux d'air Fb qu'il génère, chargé en CO₂, se mélange intimement aux leurres olfactifs concentrés dans la zone supérieure de la chambre creuse 15, le cocktail attractif gazeux étant ensuite expulsé hors de ladite chambre par les orifices 140.

Les inventeurs ont pu constater de manière surprenante que les propriétés attractives de ce mélange, parfaitement homogénéisé et expulsé selon un rythme sinusoïdal, étaient nettement améliorées par rapport aux cocktails attractifs diffusés selon les techniques décrites dans les demandes de brevets précités, et notamment selon un rythme séquencé. Le rythme sinusoïdal de ces expirations excite de manière optimale les capteurs de tous les diptères et permet ainsi de capturer également les hématophages. Les insectes, attirés par ce stimulus, cherchent instinctivement à atteindre la zone où le cocktail attractif a une concentration maximale, c'est-à-dire la chambre creuse 15.

Arrivés à proximité de la source du cocktail attractif, les insectes se dirigent vers la chambre 15. Le ventilateur 23 crée une dépression continue au niveau de l'orifice d'aspiration 220 et génère le flux d'air Fa. Lorsque, pour atteindre la chambre 15, les insectes volent à proximité de l'orifice d'aspiration 220, ils sont aspirés dans le flux d'air Fa puis retenus dans le piège 3.

Les inventeurs ont également constaté que certains insectes piqueurs comme les moustiques tropicaux peuvent avoir du mal à finaliser leur course vers l'orifice d'aspiration 220. Aussi, pour améliorer davantage l'attraction de ces insectes, le dispositif d'aspiration 2 comprend avantageusement un élément chauffant disposé au niveau de l'orifice d'aspiration 220, lequel élément simule la chaleur corporelle. Sur la figure 7, l'élément chauffant 240 est situé au dessus de l'orifice d'aspiration 220, en amont de celui-ci. Cet élément chauffant 240 peut se présenter sous la forme d'une résistance électrique chauffante. Il est préférentiellement chauffé à une température comprise entre 35°C et 45°C. Ce point de chauffe permet aux insectes piqueurs ou mordeurs de visualiser une zone corporelle simulée pouvant faciliter leurs piqures ou morsures. Les insectes sont alors guidés vers une zone de non retour où l'aspiration du flux Fa va être plus forte que leur capacité de vol, de sorte qu'ils sont aspirés par l'orifice 220 et capturés.

Comme illustrée sur les figures annexées, le dispositif de diffusion 1, le dispositif d'aspiration 2 et le piège 3 forment une structure S solidarisée au châssis 4. Cette structure S est distante du châssis 4 et écartée latéralement de ce dernier.

La liaison entre la structure S et le châssis 4 est réalisée d'au moins un moyen de réglage en hauteur de ladite structure dans le sens d'un écartement ou d'un rapprochement du niveau du sol de l'orifice d'aspiration 220. Cette possibilité de réglage en hauteur permet à l'utilisateur de moduler la configuration de l'appareil A en fonction de la ou des espèces d'insectes volants nuisibles à piéger qu'il aura préalablement identifiées. Il peut ainsi régler de façon optimale la hauteur de l'orifice d'aspiration 220 selon que les espèces à traiter qu'il aura identifiées volent près du sol ou à distance de celui-ci, améliorant de fait l'efficacité de l'appareil A en termes de piégeage. En d'autres termes, lorsque l'utilisateur installe l'appareil dans une zone à traiter, et qu'il a déterminé la ou les espèces d'insectes volants nuisibles à prendre au piège, il lui suffit de régler la hauteur de la structure S. Si les espèces à traiter volent près du sol, le réglage se fera dans un sens du rapprochement du niveau du sol de l'orifice d'aspiration 220. Au contraire, si les espèces à traiter volent à distance du sol, le réglage se fera dans un sens d'un éloignement du niveau du sol de l'orifice d'aspiration 220. L'appareil peut de ce fait être considéré comme universel dans la mesure où il fonctionne de manière optimale dans n'importe quelle zone géographique et quelles que soient les espèces d'insectes volants nuisibles à prendre au piège.

De bons résultats permettant de traiter la majeure partie des espèces d'insectes volants nuisibles sont obtenus lorsque la distance « D » entre le sol et l'orifice d'aspiration 220 varie de 40 cm à 1 m. Des résultats satisfaisants sont également obtenus en prévoyant trois positions de réglage en hauteur différentes : une position basse où « D » est environ égale à 50 cm ; une position intermédiaire où « D » est environ égale à 65 cm ; et une position haute où « D » est environ égale à 80 cm. Cette modularité est particulièrement efficace pour les moustiques tropicaux de type Aedes Alobopictus, Aegypti et Anophèles qui volent près du sol et cherchent à piquer leur proie sur les parties basses du corps.

Selon un premier mode de réalisation illustré notamment sur les figures 1, 2 et 7, le moyen de réglage en hauteur se présente sous la forme d'au moins une, préférentiellement deux traverses 5 fixées à la structure S et plus particulièrement fixées à la boîte 20 formant le dispositif d'aspiration 2. Dans ce mode de réalisation, il n'y a pas de mouvement relatif entre les traverses 5 et la boîte 20.

Les traverses 5 se présentent sous la forme de profilés rigides parallèles, disposés de manière horizontale ou, en d'autres termes, normales aux parois des boîtes 20 et 40. Leur section peut être carrée, rectangulaire, ronde, ovale, ou autre, et elles sont avantageusement réalisées en acier ou en plastique. Leur longueur est par exemple comprise entre 10 cm et 30 cm de sorte que la structure S soit sensiblement distante du châssis 4 de cette même longueur. Chaque traverse 5 peut être réalisée en une seule pièce obtenue par extrusion, moulage ou usinage, ou en deux pièces assemblées entre-elles selon le plan médian de ladite traverse. La fixation de la traverse 5 sur la paroi de la boîte 20 se fait au niveau de l'extrémité distale de ladite traverse, par vissage, boulonnage, encliquetage ou au moyen d'une bride.

Chaque traverse 5 se solidarise au châssis 4 selon une pluralité de positions verticales permettant de régler l'écartement ou le rapprochement du niveau du sol de l'orifice d'aspiration 220. Ces différentes positions verticales se matérialisent par des évidements ou logements 50 réalisés dans au moins une paroi de la boîte 40 formant le châssis 4. Ces évidements ou logements 50 sont préférentiellement traversants et ont une section qui correspond à celle des traverses 5. L'extrémité proximale des traverses 5 vient ainsi se loger par emboîtement dans un évidement ou logement 50. Un maintien en position des traverses 5 dans les évidements ou logements 50 peut être assuré par une solution par vissage, boulonnage ou encliquetage de l'extrémité proximale desdites traverses dans la paroi de la boîte 40.

Les évidements ou logements 50 sont disposés en colonne et sont au nombre de quatre sur les figures annexées. Leur nombre peut toutefois varier de 2 à 10 en fonction du nombre de traverses 5 utilisées et/ou du réglage souhaité de la hauteur.

Dans une variante de réalisation, le réglage de la hauteur se fait au niveau de la structure S. La ou les traverses 5 sont ici fixées au châssis 4 et plus particulièrement à la boîte 40, sans mouvement relatif entre lesdites traverses et ladite boîte. Chaque traverse 5 se solidarise à la structure S selon une pluralité de positions verticales permettant de régler l'écartement ou le rapprochement du niveau du sol de l'orifice d'aspiration 220. Les évidements ou logements 50 décrits précédemment sont ainsi réalisés dans au moins une paroi de la boîte 20 formant le dispositif d'aspiration 2 de sorte que l'extrémité distale d'une traverse 5 vient se loger par emboîtement dans un desdits évidements selon la position de réglage en hauteur choisie.

Selon une caractéristique avantageuse de l'invention, une connexion fluidique entre la source de gaz 41 et le dispositif de diffusion 1 passe au travers d'au moins une traverse 5. De même, une connexion électrique entre la source d'alimentation électrique 42 et la structure S passe au travers d'au moins une traverse 5. La connexion fluidique et la connexion électrique peuvent passer au travers de la même traverse 5 ou dans des traverses distinctes.

La traverse 5 offre ainsi une protection physique à ces connexions. En outre, le fait que la traverse 5 fasse office de support à ces connexions facilite la modularité de l'appareil A lors du réglage de la hauteur de l'orifice d'aspiration 220, notamment le raccordement et l'alimentation en gaz et en électricité de la partie attractive et aspirante (structure S) à la partie technique (châssis 4).

Pour simplifier la conception, la traverse 5 présente un conduit creux débouchant à ses deux extrémités et dans lequel sont logées les connexions fluidique et électrique. Plus particulièrement, leur extrémité distale débouche dans la chambre creuse 25 de la boîte 20 et leur extrémité proximale débouche dans la chambre creuse 45 de la boîte 40.

Sur la figure 7, le tuyau 42 connecté à la bonbonne 41 court à l'intérieur de la traverse 5, passe dans la chambre creuse 25 de la boîte 20 et débouche dans la zone inférieure de la chambre 15 du dispositif de diffusion 1. Egalement, un câble électrique 460 connecté à la batterie 46 court à l'intérieur de la même traverse 5 et débouche dans la chambre creuse 25 de façon à pouvoir alimenter les différents composants électroniques 60, 230, 30 et les actionneurs 6, 23 contenus dans la structure S. On réalise ainsi de manière très simple et totalement sécurisée la connexion fluidique et électrique entre le châssis 4 et la structure S qui sont parfaitement protégées et rendues inaccessibles.

Lorsque l'utilisateur fait varier la hauteur de la structure S, il est amené à désengager les traverses 5 d'évidements ou logements 50 pour les repositionner dans d'autres évidements ou logements. Pour faciliter cette manipulation, il apparaît avantageux de prévoir des connectiques démontables pour le tuyau 42 et le câble électrique 460. En se rapportant à la figure 10, le tuyau 42 est pourvu d'un connecteur démontable 420 du type raccord rapide et le câble électrique 460 d'un connecteur électrique démontable 4600 du type fiche mâle-femelle. Ces connectiques 420, 4600 sont situées au niveau de l'extrémité proximale de la traverse 5 et accessibles depuis l'intérieur de la chambre 45 du châssis 4.

Ainsi, pour modifier la position des traverses 5, il suffit à l'utilisateur de : déconnecter les connectiques 420, 4600 ; désengager la traverse 5 de l'évidement ou logement dans lequel elle est emboîtée ; repositionner la traverse 5 dans un autre évidement ou logement ; et enfin reconnecter les connectiques 420, 4600.

Sur les figures 1 et 2, le dispositif de diffusion 1 est maintenu à distance de l'orifice d'aspiration 220 par l'intermédiaire d'entretoises 12. Ces dernières consistent préférentiellement en des tubes creux dont la longueur est par exemple comprise entre 2 cm et 15 cm et qui sont fixés d'une part sur le couvercle 210 de la boîte 20 et d'autre part au plateau 11, autour de l'orifice d'aspiration 220. Pour alimenter en gaz et en électricité le dispositif de diffusion 1, on constate sur la figure 7 que le tuyau 42 et le câble électrique 460 passent au travers de ces entretoises 12 de sorte que les connexions fluidique et électrique entre la boîte 20 et le dispositif de diffusion 1 sont parfaitement protégées et rendues inaccessibles.

En disposant une pluralité de ces appareils A à des endroits judicieusement choisis, on peut former une ceinture de protection autour d'une petite communauté urbaine ou encore un espace public ouvert, permettant ainsi de les préserver des nuisances dues aux insectes nuisibles ciblés. Bien entendu, l'alimentation en CO₂ peut être propre à chaque appareil A ou être commune à plusieurs appareils.

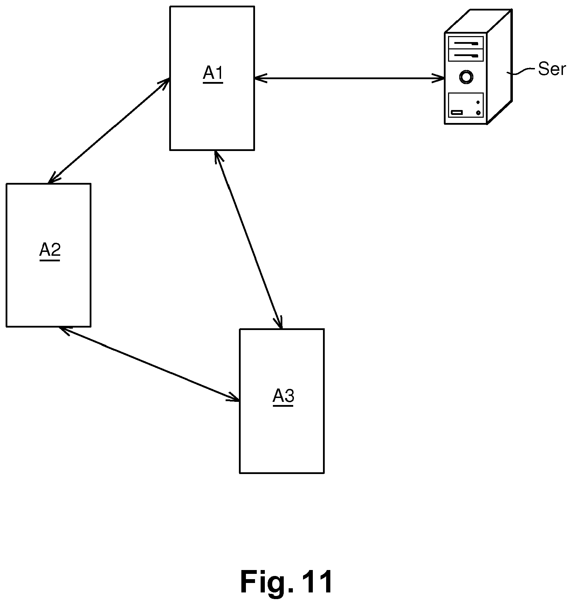

L'appareil A (ou chacun des appareils) comporte avantageusement une carte électronique adaptée pour assurer son fonctionnement autonome ou programmé. Cette carte électronique peut par exemple :
- commander les plages de fonctionnement de l'appareil A (ou chacun des appareils) ;
- et/ou basculer l'alimentation électrique de l'appareil entre la batterie 46 et un réseau de distribution électrique ;
- et/ou recevoir un signal électronique incluant des données atmosphériques en relation avec l'environnement dans lequel se trouve l'appareil A ; traiter ce signal électronique ; et commander l'interruption du fonctionnement de l'appareil A lorsque le signal électronique inclut des données atmosphériques qui ne sont pas favorables à la prise au piège des insectes volants nuisibles. Les données atmosphériques en question peuvent être la température externe, le taux d'humidité externe, la pression atmosphérique, la vitesse du vent, et autres. Ces données peuvent être directement issues de capteurs placés à l'extérieur l'appareil A ou provenir de stations météorologiques locales, ou régionales ;
- et/ou permettre aux appareils A de communiquer entre eux. A cet effet, en se rapportant à la figure 11, lorsque plusieurs appareils A1, A2, A3 sont mis en réseau et sont adaptés pour communiquer entre eux, il peut être avantageux qu'un des appareils A1 soit considéré comme un maître et les autres comme esclaves. L'appareil maître A1 recueille les informations et/ou données provenant des appareils esclaves A2, A3 et les communique à un serveur distant Ser. Une solution de communication de type Lora^{®} est préférentiellement utilisée pour faciliter le dialogue interne entre les appareils A1, A2 A3. La communication entre l'appareil maître A1 et le serveur distant Ser est effectuée à l'aide de moyens de communication sans fil du type WIFI, 3G, ou autre. Cette topologie s'avère particulièrement utile dans des zones géographiques de faible couverture réseau puisque cela limite au seul appareil maître A1 le nombre de points réseau nécessaires sur l'installation ;
- et/ou gérer à distance le fonctionnement du ou des appareils A, par exemple à l'aide de moyens de communication sans fil du type WIFI, 3G ou autre ;
- et/ou remonter des messages de dysfonctionnement de l'appareil A à un serveur distant, en vue d'une gestion rapide des éventuels dysfonctionnements.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- Les boîtes 10, 20, 40 ne sont pas forcément de forme parallélépipédique, mais peuvent être de forme polygonale, cylindrique, etc.
- L'orifice d'aspiration 220 peut-être circulaire, ovale, rectangulaire, carrée, etc.
- Le châssis 4 n'est pas forcément de forme parallélépipédique ou cylindrique. Il peut être de toute autre forme convenant à l'homme du métier.
- Le moyen d'aspiration 23 peut se présenter sous la forme d'une pompe à vide.
- Le moyen 6 pour générer le flux Fb peut se présenter sous la forme d'un soufflé actionné mécaniquement, ou sous la forme d'une pompe.
- Le CO₂ peut être diffusé selon un rythme sinusoïdal dans la chambre creuse 15, par exemple selon le même rythme que le fonctionnement du ventilateur 6.
- Le CO₂ constituant le cocktail attractif gazeux peut être remplacé par tout autre gaz convenant à l'homme du métier.
- Les leurres olfactifs peuvent être utilisés sous forme de gaz.
- Une résistance électrique peut être prévue pour chauffer l'intérieur de la chambre creuse 5 et le cas échéant, le matériau réfractaire qu'elle contient.
- Le comptage des insectes peut être assuré par d'autres détecteurs installé entre les déflecteurs 30, comme des capteurs infrarouges passifs (ou capteur PIR de l'anglais « Passive Infrared sensor ») adaptés pour détecter les radiations infrarouges émises par les insectes passant entre lesdits déflecteurs.

## Revendications

1. Appareil pour prendre au piège des insectes volants nuisibles comprenant :
- un dispositif de diffusion (1), dans l'air ambiant environnant, d'un cocktail attractif gazeux dont la composition est adaptée pour attirer les insectes,
- un dispositif d'aspiration (2) présentant un orifice d'aspiration (220) d'un flux d'air ambiant environnant contenant les insectes attirés par le cocktail attractif gazeux diffusé,
- un piège (3) à insectes agencé avec le dispositif d'aspiration (2) de sorte que les insectes aspirés par ledit dispositif soient retenus dans ledit piège,
- un compteur optique d'insectes,
**se caractérisant par le fait que** le compteur optique d'insectes comprend une série de déflecteurs (30) parallèles installés en travers de l'orifice d'aspiration (220), une barrière lumineuse composée d'un émetteur de lumière (31) et d'un récepteur de lumière (32) étant installé dans chaque intervalle entre lesdits déflecteurs.

2. Appareil selon la revendication 1, dans lequel les déflecteurs (30) sont espacés les uns des autres d'une distance comprise entre 4 mm et 9 mm.

3. Appareil selon l'une des revendications précédentes, dans lequel l'émetteur (31) est une LED infrarouge et le récepteur (32) est une photodiode.

4. Appareil selon l'une des revendications précédentes, dans lequel le compteur optique d'insectes est situé au début de la zone d'aspiration de l'orifice d'aspiration (220).

5. Appareil selon l'une des revendications précédentes, dans lequel :
- un châssis (4) renferme une source de gaz (41) reliée au dispositif de diffusion (1), lequel gaz est un constituant du cocktail attractif gazeux,
- le dispositif de diffusion (1), le dispositif d'aspiration (2) et le piège à insectes (3) forment une structure (S) reliée au châssis (4) par l'intermédiaire d'au moins un moyen de réglage en hauteur de ladite structure, dans le sens d'un écartement ou d'un rapprochement du niveau du sol de l'orifice d'aspiration (220).

6. Appareil selon la revendication 5, dans lequel le moyen de réglage en hauteur se présente sous la forme d'au moins une traverse (5) fixée à la structure (S), laquelle traverse se solidarise au châssis (4) selon une pluralité de positions verticales (50) permettant de régler l'écartement ou le rapprochement du niveau du sol de l'orifice d'aspiration.

7. Appareil selon la revendication 5, dans lequel le moyen de réglage en hauteur se présente sous la forme d'au moins une traverse (5) fixée au châssis (4), laquelle traverse se solidarise à la structure (S) selon une pluralité de positions verticales (50) permettant de régler l'écartement ou le rapprochement du niveau du sol de l'orifice d'aspiration (220).

8. Appareil selon l'une des revendications 6 ou 7, dans lequel une connexion fluidique est réalisée entre la source de gaz installée dans le châssis (4) et le dispositif de diffusion (1), laquelle connexion fluidique passe au travers de la au moins une traverse (5).

9. Appareil selon l'une des revendications 5 à 8 dans lequel une source d'alimentation électrique (42) est installée dans le châssis (4), une connexion électrique étant réalisée entre ladite source et la structure (S), laquelle connexion électrique passe au travers de la au moins une traverse (5).

10. Appareil selon l'une des revendications 5 à 9, dans lequel le châssis (4) se présente sous la forme d'un lampadaire urbain.

11. Appareil selon l'une des revendications précédentes, dans lequel le dispositif d'aspiration (2) comprend un élément chauffant (240) disposé au niveau de l'orifice d'aspiration (220), en amont dudit orifice.

12. Appareil selon la revendication 11, dans lequel l'élément chauffant (240) est chauffé à une température comprise entre 35°C et 45°C.

13. Appareil selon l'une des revendications précédentes, dans lequel le dispositif de diffusion (1) est piloté par une unité de commande (60) adaptée pour que le cocktail attractif gazeux soit diffusé dans l'air ambiant environnant selon un rythme sinusoïdal simulant un rythme de respiration d'un être humain.

14. Appareil selon la revendication 13, dans lequel l'unité de commande (60) est adaptée pour faire varier la fréquence du rythme sinusoïdal de diffusion du cocktail attractif gazeux.

15. Procédé pour compter des insectes volants nuisibles, ledit procédé consistant à :
- diffuser, dans l'air ambiant environnant, un cocktail attractif gazeux dont la composition est adaptée pour attirer les insectes,
- aspirer, au travers d'un orifice d'aspiration (220), un flux d'air ambiant environnant contenant les insectes attirés par le cocktail attractif gazeux diffusé,
- retenir dans un piège (3) les insectes aspirés,
- compter de manière optique les insectes aspirés au travers de l'orifice d'aspiration (220),
**se caractérisant par le fait que** le procédé comprend en outre les étapes consistant à :
- installer une série de déflecteurs (30) parallèles en travers de l'orifice d'aspiration (220),
- installer, dans chaque intervalle entre les déflecteurs (30), une barrière lumineuse composée d'un émetteur de lumière (31) et d'un récepteur de lumière (32).

## Patentansprüche

1. Gerät zum Einfangen von schädlichen fliegenden Insekten, umfassend:
- eine Ausgabevorrichtung (1) zum Ausgeben einer gasförmigen Lockmischung, deren Zusammensetzung zum Anlocken der Insekten geeignet ist, in die umgebende Umgebungsluft,
- eine Ansaugvorrichtung (2), die eine Ansaugöffnung (220) zum Ansaugen eines umgebenden Umgebungsluftstroms aufweist, der die von der ausgegebenen gasförmigen Lockmischung angelockten Insekten enthält,
- eine Insektenfalle (3), die mit der Ansaugvorrichtung (2) so gestaltet ist, dass die von der Vorrichtung angesaugten Insekten in der Falle zurückgehalten werden,
- einen optischen Insektenzähler,
**dadurch gekennzeichnet, dass** der optische Insektenzähler eine Reihe von parallelen Deflektoren (30) umfasst, die quer durch die Ansaugöffnung (220) installiert sind, wobei eine Lichtschranke, die aus einem Lichtsender (31) und einem Lichtempfänger (32) besteht, in jedem Zwischenraum zwischen den Deflektoren installiert ist.

2. Gerät nach Anspruch 1, bei dem die Deflektoren (30) voneinander um eine Distanz zwischen 4 mm und 9 mm beabstandet sind.

3. Gerät nach einem der vorhergehenden Ansprüche, bei dem der Sender (31) eine Infrarot-LED ist und der Empfänger (32) eine Fotodiode ist.

4. Gerät nach einem der vorhergehenden Ansprüche, bei dem der optische Insektenzähler am Anfang des Ansaugbereichs der Ansaugöffnung (220) gelegen ist.

5. Gerät nach einem der vorhergehenden Ansprüche, bei dem:
- ein Gehäuse (4) eine Gasquelle (41) umschließt, die mit der Ausgabevorrichtung (1) verbunden ist, wobei das Gas ein Bestandteil der gasförmigen Lockmischung ist,
- die Ausgabevorrichtung (1), die Ansaugvorrichtung (2) und die Insektenfalle (3) eine Struktur (S) bilden, die mit dem Gehäuse (4) über mindestens ein Mittel zur Höheneinstellung der Struktur im Sinne einer Entfernung oder einer Annäherung der Ansaugöffnung (220) von der oder an die Bodenhöhe verbunden ist.

6. Gerät nach Anspruch 5, bei dem das Mittel zur Höheneinstellung in Form mindestens eines Querträgers (5) vorliegt, der an der Struktur (S) fixiert ist, wobei sich der Querträger an dem Gehäuse (4) gemäß einer Mehrzahl von vertikalen Positionen (50) befestigen lässt, die es ermöglichen, die Entfernung oder die Annäherung der Ansaugöffnung von der oder an die Bodenhöhe einzustellen.

7. Gerät nach Anspruch 5, bei dem das Mittel zur Höheneinstellung in Form mindestens eines Querträgers (5) vorliegt, der an dem Gehäuse (4) fixiert ist, wobei sich der Querträger an der Struktur (S) gemäß einer Mehrzahl von vertikalen Positionen (50) befestigen lässt, die es ermöglichen, die Entfernung oder die Annäherung der Ansaugöffnung (220) von der oder an die Bodenhöhe einzustellen.

8. Gerät nach einem der Ansprüche 6 oder 7, bei dem eine Fluidleitung zwischen der in dem Gehäuse (4) installierten Gasquelle und der Ausgabevorrichtung (1) ausgeführt ist, wobei die Fluidleitung durch den mindestens einen Querträger (5) verläuft.

9. Gerät nach einem der Ansprüche 5 bis 8, bei dem eine Stromversorgungsquelle (42) in dem Gehäuse (4) installiert ist, wobei eine Stromleitung zwischen der Quelle und der Struktur (S) ausgeführt ist, wobei die Stromleitung durch den mindestens einen Querträger (5) verläuft.

10. Gerät nach einem der Ansprüche 5 bis 9, bei dem das Gehäuse (4) in Form einer Straßenlaterne vorliegt.

11. Gerät nach einem der vorhergehenden Ansprüche, bei dem die Ansaugvorrichtung (2) ein Heizelement (240) umfasst, das auf Höhe der Ansaugöffnung (220) der Öffnung vorgelagert angeordnet ist.

12. Gerät nach Anspruch 11, bei dem das Heizelement (240) auf eine Temperatur zwischen 35 °C und 45 °C erwärmt wird.

13. Gerät nach einem der vorhergehenden Ansprüche, bei dem die Ausgabevorrichtung (1) von einer geeigneten Steuereinheit (60) angesteuert wird, damit die gasförmige Lockmischung in die umgebende Umgebungsluft gemäß einem sinusförmigen Rhythmus ausgegeben wird, der einen Atemrhythmus eines Menschen simuliert.

14. Gerät nach Anspruch 13, bei dem die Steuereinheit (60) geeignet ist, die Frequenz des sinusförmigen Ausgaberhythmus der gasförmigen Lockmischung variieren zu lassen.

15. Verfahren zum Zählen von schädlichen fliegenden Insekten, wobei das Verfahren darin besteht
- in die umgebende Umgebungsluft eine gasförmige Lockmischung auszugeben, deren Zusammensetzung zum Anlocken der Insekten geeignet ist,
- durch eine Ansaugöffnung (220) einen umgebenden Umgebungsluftstrom anzusaugen, der die von der ausgegebenen gasförmigen Lockmischung angelockten Insekten enthält,
- die angesaugten Insekten in einer Falle (3) zurückzuhalten,
- die durch die Ansaugöffnung (220) angesaugten Insekten optisch zu zählen,
**dadurch gekennzeichnet, dass** das Verfahren ferner die Schritte umfasst, die darin bestehen:
- eine Reihe von parallelen Deflektoren (30) quer durch die Ansaugöffnung (220) zu installieren,
- in jedem Zwischenraum zwischen den Deflektoren (30) eine Lichtschranke zu installieren, die aus einem Lichtsender (31) und aus einem Lichtempfänger (32) besteht.

## Claims

1. Device for trapping damaging flying insects comprising:
- a diffusion device (1) for diffusing, into the surrounding ambient air, an attractive gaseous cocktail of which the composition is suitable for attracting the insects,
- a suctioning device (2) having a suctioning orifice (220) for suctioning in a flow of surrounding ambient air containing the insects attracted by the diffused attractive gaseous cocktail,
- an insect trap (3) arranged with the suctioning device (2) such that the insects suctioned in by said device are held in said trap,
- an optical insect counter,
**characterized in that** the optical insect counter comprises a series of parallel deflectors (30) installed through the suctioning orifice (220), a luminous barrier composed of a light emitter (31) and a light receiver (32) being installed in each interval between said deflectors.

2. Device according to Claim 1, wherein the deflectors (30) are spaced apart from one another by a distance of between 4 mm and 9 mm.

3. Device according to either of the preceding claims, wherein the emitter (31) is an infrared LED and the receiver (32) is a photodiode.

4. Device according to one of the preceding claims, wherein the optical insect counter is situated at the start of the suctioning area of the suctioning orifice (220) .

5. Device according to one of the preceding claims, wherein:
- a chassis (4) contains a gas source (41) connected to the diffusion device (1), which gas is a component of the attractive gaseous cocktail,
- the diffusion device (1), the suctioning device (2) and the insect trap (3) form a structure (S) connected to the chassis (4) by way of at least one means for adjusting the height of said structure, in the direction of moving the suctioning orifice (220) away from or towards the level of the ground.

6. Device according to Claim 5, wherein the means for adjusting the height takes the form of at least one crossmember (5) attached to the structure (S), which crossmember is secured to the chassis (4) in a plurality of vertical positions (50) allowing the position of the suctioning orifice to be adjusted away from or towards the level of the ground.

7. Device according to Claim 5, wherein the means for adjusting the height takes the form of at least one crossmember (5) attached to the chassis (4), which crossmember is secured to the structure (S) in a plurality of vertical positions (50) allowing the position of the suctioning orifice (220) to be adjusted away from or towards the level of the ground.

8. Device according to Claim 6 or 7, wherein a fluidic connection is made between the gas source installed in the chassis (4) and the diffusion device (1), which fluidic connection passes through the at least one crossmember (5).

9. Device according to one of Claims 5 to 8, wherein an electric power source (42) is installed in the chassis (4), an electrical connection being made between said source and the structure (S), which electrical connection passes through the at least one crossmember (5).

10. Device according to one of Claims 5 to 9, wherein the chassis (4) takes the form of a streetlight.

11. Device according to one of the preceding claims, wherein the suctioning device (2) comprises a heating element (240) arranged at the level of the suctioning orifice (220), upstream of said orifice.

12. Device according to Claim 11, wherein the heating element (240) is heated to a temperature of between 35°C and 45°C.

13. Device according to one of the preceding claims, wherein the diffusion device (1) is controlled by a control unit (60) designed such that the attractive gaseous cocktail is diffused into the surrounding ambient air at a sinusoidal rhythm simulating a human being's breathing rhythm.

14. Device according to Claim 13, wherein the control unit (60) is designed to vary the frequency of the sinusoidal rhythm for diffusing the attractive gaseous cocktail.

15. Method for counting damaging flying insects, said method consisting in:
- diffusing, into the surrounding ambient air, an attractive gaseous cocktail, of which the composition is suitable for attracting the insects,
- suctioning in, through a suctioning orifice (220), a flow of surrounding ambient air containing the insects attracted by the diffused attractive gaseous cocktail,
- holding the suctioned insects in a trap (3),
- optically counting the insects suctioned in through the suctioning orifice (220),
**characterized in that** the method further comprises the steps of:
- installing a series of parallel deflectors (30) through the suctioning orifice (220), and
- installing, in each interval between the deflectors (30), a luminous barrier composed of a light emitter (31) and a light receiver (32).
